Europäisches Patentamt

European Patent Office

Office européen des brevets

(11) Publication number: **0 123 380**
**B1**

(12) EUROPEAN PATENT SPECIFICATION

(45) Date of publication of patent specification: **09.09.87**　　(51) Int. Cl.⁴: **F 16 K 1/226**

(21) Application number: **84301121.4**

(22) Date of filing: **22.02.84**

(54) Butterfly valve seat.

(30) Priority: **15.03.83 US 475647**

(43) Date of publication of application:
**31.10.84 Bulletin 84/44**

(45) Publication of the grant of the patent:
**09.09.87 Bulletin 87/37**

(84) Designated Contracting States:
**DE GB**

(56) References cited:
**FR-A-2 476 789**
**GB-A-2 107 436**
**US-A-4 113 268**
**US-A-4 162 782**
**US-A-4 331 319**
**US-A-4 396 199**
**US-A-4 418 889**

(73) Proprietor: **Jamesbury Corporation**
**640 Lincoln Street**
**Worcester Massachusetts 01605 (US)**

(72) Inventor: **Donnelly, James F.**
**25 Cedar Street Auburn**
**Massachusetts 01501 (US)**
Inventor: **Bregman, Arie P.**
**26 Tanglewood Road Sterling Junction**
**Massachusetts 01565 (US)**

(74) Representative: **Eurolink**
**Regent House Heaton Lane**
**Stockport Cheshire, SK4 1BS (GB)**

## Description

This invention relates to rotary fluid control valves of the butterfly type wherein a wafer or disc is mounted for rotation between an open position, in which the disc lies substantially parallel to the axis of the fluid flow channel through the valve, and the closed position in which the disc lies perpendicular to this axis. The disc, in its closed position, cooperates with an annular seat circumscribing the fluid flow channel to shut off fluid flow through the channel. The annular seat is held in position by being clamped in a recess formed between complementary surfaces of a portion of the valve body and a valve seat insert. The insert may be bolted to the valve body, or more commonly, the insert is fixed in position when the valve is bolted between the pipe flanges formed on the pipes that convey fluid to and from the valve. An example of this type of valve is described in U.S.—A—4,331,319.

With a butterfly valve of the type just described, it is desirable to provide features that will optimize the sealing effectiveness of the valve, yet minimize disadvantages apparent in prior art butterfly valves. For example, it is advantageous for a butterfly valve to provide a tight seal regardless of the direction of fluid flow, and continue to do so despite continuous reversal of pressure differentials across the valve. Further, pressure up to and including the full valve pressure rating should be appliable from either direction without leaking across the valve.

Butterfly valves are frequently subjected to a wide range of temperatures, both from the ambient environment in which they operate and from the flowing media being controlled. Further, the temperature will frequently cycle over a relatively wide range and it is advantageous for a butterfly valve to withstand these temperature variations without adverse effects on its sealing capabilities.

The temperature variations described above, as well as bi-directional fluid pressure, can cause distortions of the valve seat which will result in improper sealing between the seat and the butterfly valve disc. In the prior art, it was common to form the valve seat of an elastomeric material, or to provide the valve seat with an elastomeric insert at the sealing surface. The elastomeric material had the advantage that if thermal or fluid pressure stresses caused distortions of the valve seat which would tend to inhibit complete sealing the valve disc and the seat, the elastomeric material at the sealing surface could distort, under the closing torque of the valve seat, so as to deform into the shape of the peripheral surface of the disc and establish a perfect seal. Such a valve is disclosed for example in US—A—4 113 268.

A further advantage of elastomeric materials for the valve seat, or for sealing inserts of the valve seats, was the tendency of metal sealing surfaces to leak after a few closure cycles as a result of scratches occurring in valve seats having metal seals. That is, unless hardened surfaces were provided for these metal valve seats, impurities in the flowing fluid had a tendency to abrade and scratch the metal valve seats after a few closing cycles. The pressurized fluid could leak past the metal valve seat sealing surface through these scratches.

However, the use of elastomeric materials as the sealing surfaces for valve seats has not been found to be completely satisfactory either. First, although elastomeric valve seat sealing surfaces do not leak as readily as metal valve seat sealing surfaces upon the occurrence of abrasion or wear, the elastomeric valve seat sealing surfaces are more susceptible to softening and failure at high temperatures than metal valve seat sealing surfaces and so must be replaced more often. Metal seats, on the other hand, are not subject to such softening. Second, where flammable fluids are being conveyed, the risk of fire exists and elastomeric valve seats, or valve seat sealing surfaces, may be quickly destroyed under such circumstances.

It is therefore advantageous for a butterfly valve to have a seat that can accommodate thermal and pressure stresses, that will not leak after a few cycles of use, that has a long life and that will be effective at high and low temperatures.

The problem of providing such a seat is solved according to the invention in a valve including a housing and a butterfly valve disc, the housing having a recess in which the annular valve seat is located, and the valve seat having both metal and elastomeric sealing surfaces, by said valve seat comprising a radially outer metal tail portion fixed to the housing, a radially intermediate metal support portion flexibly movable within said recess and a radially inner metal seal portion having a metal sealing surface in the form of an annular semi-torus, said seal portion including retaining means for retaining an elastomeric sealing insert providing said elastomeric sealing surface.

The valve seat is normally positioned within the valve so that the metal sealing surface is upstream from the elastomeric insert in the fluid flow direction, thus protecting the elastomeric insert from wear due to fluid flow. In the case of the destruction of the elastomeric insert by fire, the metal sealing surface alone can provide a sealing function.

Various other objects, features and attendant advantages of the present invention will be more fully appreciated as the same becomes better understood from the following detailed description when considered in connection with the accompanying drawings in which like reference characters designate like or corresponding parts throughout the several views wherein:

Figure 1 is a cross-sectional view of one embodiment of a valve seat of the present invention, mounted within a valve body and in sealing cooperation with the sealing surface of the disc of the butterfly valve after an extended period of use;

Figure 2 is a cross-sectional view of the valve seat of Figure 1 showing the sealing configuration between the valve seat and the valve disc when a new valve seat is introduced into the valve; and

Figure 3 is a sectional view of the elastomeric insert prior to being crimped into the valve seat.

The present invention will now be described with reference to the attached Figures wherein the same reference numerals are used for the same or corresponding parts throughout the several views.

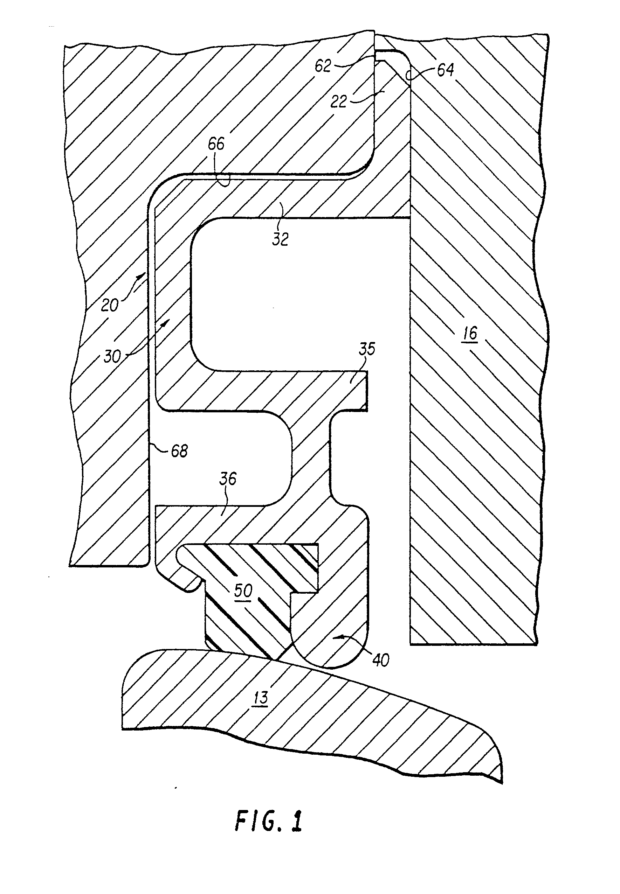

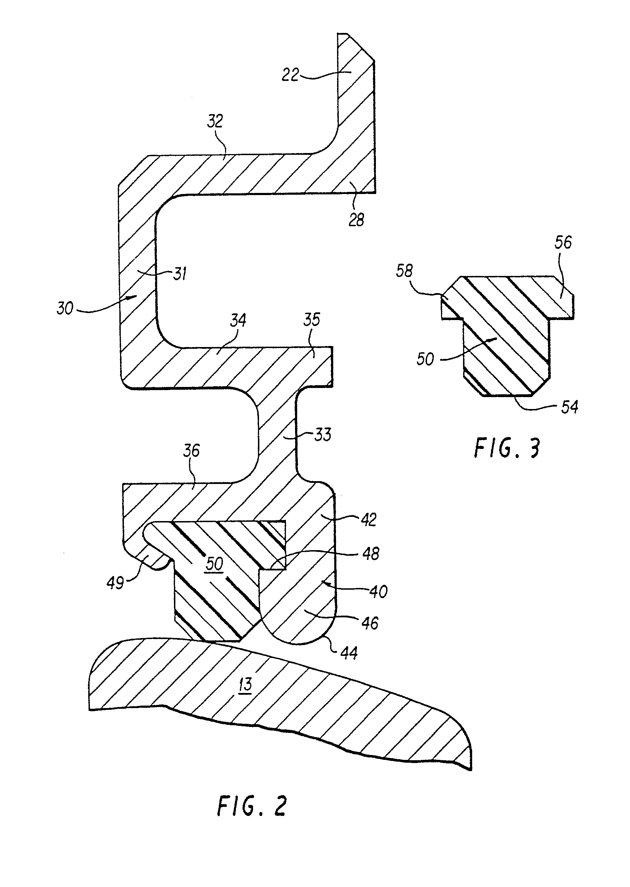

The valve seat of the present invention is inserted in a butterfly valve assembly such as that shown in Figure 1 of said U.S. Patent 4,331,319. In particular, as seen in the accompanying Figures 1 and 2, the valve seat 20 consists of a radially outer tail portion 22, a radially intermediate support portion 30 and a radially inner seat portion 40. Except as otherwise noted, the valve seat is formed of corrosion resistant metal, such as stainless steel. An elastomeric insert 50, which can be formed of polytetrafluoroethylene, is secured to the sealing portion, as will be described below.

The radially outer tail portion is elongated in the radial direction and has opposing radially extending surfaces 24 and 26. Surface 26 may be provided with concentric annular serrations (not shown). The tail portion is integrally formed with the support portion 30 and is joined thereto via a 90° bend 28.

The intermediate portion approximates the shape of an S having parallel axially extending leg portions 32, 34 and 36. The leg portions are joined by radially separated and axially opposite base portions 31 and 33. The base portions are connected to the leg portions via 90° bends, preferably having small radii of curvature (approximately 0.76 mm (0.030 inches)). An extension 35 of the intermediate leg portion 34 forms a stop, whose function will be described below.

The seal portion 40 includes a radial leg 42 extending inward from the joint defined by the base portion 33 and the radially inner leg portion 36. The radial leg 42 terminates at its distal end in an annular metal sealing surface 44. The metal sealing surface is concentric about annular center line 46, and accordingly forms a semi-torus.

The radius of sealing surface 44 about annular line 46 is preferably no less than 1 mm (0.04 inches), and is preferably not substantially larger than this value. A small radius of surface 44 about line 46 assures high hertzian contact stresses which results in better seat-disc sealing without harming the disc surface. A smaller radius, on the other hand, would constitute a sharp edge which is scratch sensitive and can harm the disc surface. In addition, the use of a curved metal sealing surface, rather than an edge, allows the application of hard coatings, which may be applied by techniques including electroplating, chemical plating and plasma coating.

The sealing portion includes structure for securing the elastomeric sealing insert 50, which is also shown in FIGURE 3. In particular, the sealing portion includes a shoulder 48 on leg 42 and an opposing leg 49.

The elastomeric insert, which may be formed of polytetrafluoroethylene, has a main body portion 52 with a sealing surface 54 at one end. Opposite the sealing surface are a pair of transverse projections 56 and 58. The annular insert 50 is inserted into the annular valve seat with the projection 56 fitted in the groove formed by the shoulder 48. The leg 49 is then bent so as to crimp the projection 58 and lock the insert 50 into position on the valve seat.

In use, the annular valve seat is clamped at the tail portion 22 between the parallel surfaces 62 and 64 of the valve body 11 and the insert 16. The concentric serrations (not shown) increase the frictional grip between the tail portion 22 and the wall 62, and prevent the seat from slipping into the path of the disc. Moreover, the fixed tail with serrations clamped between the valve body 11 and the insert 16 provides positive gasketing required for bubble tight sealing. Two further advantages of a fixed tail clamped between the valve body 11 and the insert 16 are that the positive sealing is not sensitive to machine tolerances or to sudden temperature changes.

As can be seen in Figure 1, small spaces exist between the walls of the intermediate support portion 30 and the walls 64, 66 and 68 of the valve body 11 and the insert 16. The spaces permit small amounts of axial and radial deflection for the support portion as a result of thermal and pressure stresses, as well as stresses due to the contact between the valve seat and the moving valve disc. The degree of deflection of the valve seat is limited by contact between the support portion and the walls 64 through 68, in particular, contact between the stop 35 and the wall 64. The S-shape of the intermediate support portion permits deflections in both the radial and axial directions and provides balanced loading under bidirectional pressure.

The flexure of the intermediate support portion is enhanced by the relatively thin walls of the support portion. This reduces the torque necessary to rotate the valve disc 13. The support portion need not have thick walls since the walls 64 through 68 limit the degree of deflection thereof under pressure stresses. The support of the wall 62 through 68 also means that high strength or work hardened materials are not necessary. Since National Association of Corrosion Engineers specifications do not allow work hardened material, this is an important feature.

When the valve seat is first inserted into the valve, contact between the valve seat and the valve disc 13 occurs, as seen in Figure 2. As can there be seen, the sealing surface is comprised by the sealing portion 54 of the insert 50. The elastomeric insert provides good sealing contact with no leakage, since the elastomeric surface is not sensitive to leaks resulting from scratches, as is metal.

After a relatively long period of use, the elastomeric insert becomes worn with use, as is shown in Figure 1. At that time, sealing contact between the valve disc 13 and the valve seat is provided by both the elastomeric insert and the metal sealing surface 44, and subsequent wear of the elastomeric insert is limited to the same rate as that of the metal sealing surface 44. The redundancy of the sealing surfaces assures a good seal.

The surface 44 has a small radius about line 46, of about 1 mm (0.04 inches). This small radius yields high hertzian contact stresses resulting in a better seat-disc seal without harming the disc surface as an edge would. Moreover, the 1 mm (0.04 inch) radius is less scratch sensitive than a sharp edge would be.

As a further feature of this arrangement, the valve seat is typically placed within the valve body such that the fluid flow is from right to left, as seen in Figure 1. Therefore, the fluid flow stream passes around the surface 44 before reaching the insert 50. The shape of the sealing surface 44 results in a laminar flow around surface 44 such that the elastomeric surface 50 is not subject to direct contact with the high flow rate fluid, and the wear of the insert 50 is accordingly reduced.

Of course, should the elastomeric insert be destroyed by high temperature or fire at any time, the entire sealing function could be carried by the metal sealing surface 44 with only a small amount of leakage due to scratches on the surface thereof.

**Claims**

1. An annular seat (20) for a rotary fluid control valve of the butterfly type, said valve including a housing and a butterfly valve disc (13), said housing having a recess in which the valve seat (20) is located and said valve seat (20) having both metal (40) and elastomeric (50) sealing surfaces, characterised in that said seat comprises a radially outer metal tail portion (22) fixed to the housing, a radially intermediate metal support portion (30) flexibly movable within said recess and a radially inner metal seal portion (36, 40) having a metal sealing surface (44) in the form of an annular semi-torus, said seal portion (36, 40) including retaining means (48, 49) for retaining an elastomeric sealing insert (50) providing said elastomeric sealing surface.

2. An annular valve seat according to claim 1, characterised in that said annular semi-torus (44) has a radius of at least 1 mm (0.04 inches) about an annular center line of said semi-torus.

3. An annular valve seat according to claim 1 or claim 2, characterised in that said metal sealing surface (44) is coated with a hard metallic material.

4. An annular valve seat according to any one of claims 1 to 3, characterised in that said metal sealing surface (44) is not work hardened.

5. An annular valve seat according to any one of claims 1 to 4, characterised in that said insert is fitted in said retaining means (48, 49) by crimping.

6. An annular valve seat according to any one of claims 1 to 5, characterised in that said radially intermediate metal support portion (30) approximates the shape of an "S" having radially outer (32), intermediate (34) and inner (36) parallel legs connected by radially inner (33) and outer (31) axially opposed bases, providing axial and radial flexibility for said seat.

7. An annular valve seat according to claim 6, characterised in that said tail portion (22) is circumferentially continuous, is unitarily formed with an end of said outer leg (32) opposite said radially outer base (31), and is elongated radially outward from said radially outer leg (32).

8. An annular valve seat according to claim 7, characterised in that said support portion (30) is of substantially constant thickness along the length of said S-shape, whereby said support portion (30) can flex in response to thermal and mechanical stresses.

9. An annular valve seat according to any one of claims 7 and 8, characterised in that said metal sealing surface (44) is connected to, and extends radially inward from, said radially inner base (33), and said elastomeric insert is axially spaced from said metal sealing surface.

10. An annular valve seat according to any one of claims 1 to 9, characterised in that in use said intermediate support portion (30) is positioned within a recess of said valve body having radial walls (62, 64, 68), and wherein walls of said intermediate portion (30) are positioned closely adjacent to, and spaced from, said radial walls (64, 68) of said recess, whereby said radial walls (64, 68) of said recess limit axial flexure of said intermediate portion (30).

11. An annular valve seat according to any one of claims 1 to 10, characterised in that, in use, said tail portion (22) is axially clamped between two portions of said valve body.

**Patentansprüche**

1. Ringförmiger Ventilsitz für ein Drosselklappenventil für Flüssigkeiten mit einem Gehäuse und einer Drosselklappe (13), wobei das Gehäuse eine Vertiefung aufweist, in der der Ventilsitz (20) angeordnet ist und wobei der Ventilsitz (20) sowohl metall- als auch gummiartige Dichtflächen (40, 50) aufweist, dadurch gekennzeichnet, daß der Sitz in radialer Richtung einen äußeren, in das Gehäuse fest eingesetzten Metallansatz (22), einen mittleren Stützbereich (30) aus Metall, der in der Vertiefung biegbar bewegbar ist, und einen inneren Metalldichtbereich (36, 40) aufweist, der eine Metalldichtfläche (44) in Form eines ringförmigen Halbtorus aufweist, wobei der Dichtbereich (36, 40) Haltemittel (48, 49) zur Aufnahme eines gummiartigen Dichteinsatzes (50) umfaßt, der die gummiartige Dichtfläche bildet.

2. Ringförmiger Ventilsitz nach Anspruch 1, dadurch gekennzeichnet, daß der ringförmige Halbtorus (44) einen Radius von mindestens 1 mm (0,04 inches) um eine ringförmige Mittellinie des Halbtorus herum aufweist.

3. Ringförmiger Ventilsitz nach Anspruch 1 oder 2, dadurch gekennzeichnet, daß die Metalldichtfläche mit einem harten metallischen Material beschichtet ist.

4. Ringförmiger Ventilsitz nach einem der Ansprüche 1 bis 3, dadurch gekennzeichnet, daß die Metalldichtfläche (44) nicht verfestigt ist.

5. Ringförmiger Ventilsitz nach einem der Ansprüche 1 bis 4, dadurch gekennzeichnet, daß der Einsatz in den Haltemitteln (48, 49) durch Kröpfungen festgesetzt ist.

6. Ringförmiger Ventilsitz nach einem der Ansprüche 1 bis 5, dadurch gekennzeichnet, daß der in radialer Richtung mittlere Stützbereich (30) aus Metall sich einer S-Form annähert und in radialer Richtung einen äußeren (32), mittleren (34) und inneren (36) Schenkel aufweist, die parallel zueinander liegen und durch einen in radialer Richtung inneren (33) und äußeren (31) axial zueinander versetzten Basisteil verbunden sind, wodurch eine axiale und radiale Elastizität für den Sitz vorgesehen ist.

7. Ringförmiger Ventilsitz nach Anspruch 6, dadurch gekennzeichnet, daß der Ansatz (22) über den Umfang durchgehend und nicht unterbrochen ist, mit dem Ende des äußeren Schenkels (32) axial versetzt zu dem in radialer Richtung äußeren Basisteil (31) einstückig verbunden ist und sich radial von dem in radialer Richtung äußeren Schenkel (32) nach außen erstreckt.

8. Ringförmiger Ventilsitz nach Anspruch 7, dadurch gekennzeichnet, daß der Stützbereich (30) eine im wesentlichen konstante Dicke über die Länge der S-Form aufweist, wobei der Stützbereich (30) sich in Abhängigkeit von thermischen und mechanischen Belastungen biegen kann.

9. Ringförmiger Ventilsitz nach Anspruch 7 oder 8, dadurch gekennzeichnet, daß die Metalldichtfläche (44) mit dem in radialer Richtung inneren Basisteil (33) verbunden ist und sich von diesem radial nach innen erstreckt, wobei der in radialer Richtung innere Basisteil (33) und der gummiartige Einsatz axial zu der Metalldichtfläche versetzt sind.

10. Ringförmiger Ventilsitz nach einem der Ansprüche 1 bis 9, dadurch gekennzeichnet, daß im Betrieb der mittlere Stützbereich (30) in einer Vertiefung des Ventilkörpers liegt, die radiale Wände (62, 64, 68) aufweist und daß die Wände des mittleren Bereichs (30) dicht mit Abstand zu den Wänden (64, 68) der Vertiefung gegenüberliegend angeordnet sind, wobei die radialen Wände (64, 68) der Vertiefung die axiale Durchbiegung des mittleren Bereiches (30) begrenzen.

11. Ringförmiger Ventilsitz nach einem der Ansprüche 1 bis 10, dadurch gekennzeichnet, daß im Betrieb der Ansatz (22) axial zwischen zwei Bereichen des Ventilkörpers festgeklemmt ist.

**Revendications**

1. Siège annulaire (20) pour un robinet à obturateur rotatif servant à commander l'écoulement d'un fluide, du type à papillon, robinet qui comprend un corps et un obturateur discoïde ou papillon (13), le corps présentant une cavité dans laquelle est logé le siège (20) et ce siège (20) présentant à la fois une surface d'étanchéité métallique (40) et une surface d'étanchéité en élastomère (50), caractérisé en ce que le siège comporte une partie métallique (22) située radialement à l'extérieur et formant un talon fixé au corps, une partie métallique de support (30) qui est radialement intermédiaire et est mobile par flexion dans la cavité, ainsi qu'une partie métallique d'étanchéité (36, 40) située radialement à l'intérieur et présentant une surface métallique d'étanchéité (44) ayant la forme d'un demi-tore annulaire, cette partie d'étanchéité (36, 40) comportant un dispositif de retenue (48, 49) pour retenir un joint d'étanchéité en élastomère (50) formant la surface d'étanchéité en élastomère.

2. Siège selon la revendication 1, caractérisé en ce que le demi-tore annulaire (44) a un rayon d'au moins 1 mm autour d'un axe annulaire de ce demi-tore.

3. Siège selon la revendication 1 ou 2, caractérisé en ce que la surface d'étanchéité métallique (44) est revêtue d'un matériau métallique dur.

4. Siège selon l'une quelconque des revendications 1 à 3, caractérisé en ce que la surface d'étanchéité métallique (44) n'est pas durcie par écrouissage.

5. Siège selon l'une quelconque des revendications 1 à 4, caractérisé en ce que le joint inséré est fixé dans le dispositif de retenue (48, 49) par sertissage.

6. Siège selon l'une quelconque des revendications 1 à 5, caractérisé en ce que la partie métallique de support (30), radialement intermédiaire, possède approximativement la forme d'un 'S'' avec des segments radialement extérieur (32), intermédiaire (34) et intérieur (36) qui sont parallèles et sont reliés entre eux par des segments transversaux radialement intérieur (33) et extérieur (31) qui sont axialement opposés, conférant de la flexibilité axiale et radiale au siège.

7. Siège selon la revendication 6, caractérisé en ce que le talon (22) est est circonférentiellement continu et est d'un seul tenant avec une extrémité du segment extérieur (32) située à l'opposé du segment transversal (31) situé radialement à l'extérieur, le talon possédant une forme allongée en direction radialement vers l'extérieur à partir de ce segment (32) radialement extérieur.

8. Siège selon la revendication 7, caractérisé en ce que la partie de support (30) possède une épaisseur sensiblement constante tout au long de sa forme en S, de manière à permettre à cette partie de support (30) de fléchir sous l'effet de contraintes thermiques et mécaniques.

9. Siège selon la revendication 7 ou 8, caractérisé en ce que la surface d'étanchéité métallique (44) rejoint le segment transversal (33) situé radialement à l'intérieur et s'étend radialement vers l'intérieur à partir de ce segment, et le joint inséré en élastomère est axialement espacé de cette surface d'étanchéité métallique.

10. Siège selon l'une quelconque des revendications 1 à 9, caractérisé en ce que, pendant l'utilisation, la partie de support intermédiaire (30) est située dans une cavité du corps du robinet ayant des parois radiales (62, 64, 68), les parois de la partie intermédiaire (30) étant situées à faible distance de ces parois radiales (64, 68) de la cavité, de sorte que ces parois de la cavité limitent la flexion axiale de la partie intermédiaire (30).

11. Siège selon l'une quelconque des revendications 1 à 10, caractérisé en ce que, pendant l'utilisation, le talon (22) est serré axialement entre deux parties du corps du robinet.

FIG. 1

FIG. 2

FIG. 3